# FASCICULE DE BREVET EUROPEEN

(11) **EP 1 946 640 B1**
(45) Date de publication et mention de la délivrance du brevet: **06.05.2009**
(21) Numéro de dépôt: 07291386.6
(22) Date de dépôt: 22.11.2007
(51) Int. Cl.: A21D 15/00, A21D 15/02, A21C 15/00

(54) **Procédé de fabrication de pain de mie sans croute et tranché**
Herstellungsverfahren für geschnittenes Toastbrot ohne Rinde
Method for manufacturing sliced sandwich bread without a crust

(30) Priorité: 28.12.2006 FR 0656000
(43) Date de publication de la demande: 23.07.2008
(73) Titulaire: Harry's France, 36004 Chateauroux Cedex (FR)
(72) Inventeur: Du Reau, Enguerran, 36130 Deols (FR); Maucotel, Thierry, 85100 Les Sables d'Olonne (FR); Gauthier, Jean-Bernard, 36130 Coings (FR)
(74) Mandataire: Chameroy, Claude

(56) Documents cités:
- EP-B1- 0 705 061
- GB-A- 2 299 926
- US-A1- 2004 156 966

## Description

La présente invention concerne un procédé de fabrication de pain de mie sans croûte et tranché.

Il existe déjà, dans l'art antérieur, différents procédés pour réaliser un pain de mie sans croûte. En, particulier, le document US 2004/156966 A1 décrit un procédé consistant à faire une pâte, cuire la pâte, refroidir la pâte, ôter la croûte du pain de mie ainsi obtenu, trancher le pain sans croûte et emballer le pain de mie sans croûte tranché.

Cependant, il s'avère particulièrement difficile de trancher correctement le pain de mie à sa sortie du four de cuisson en vue d'obtenir des tranches ayant une épaisseur constante d'environ 9 à 15 millimètres.

En effet, le pain de mie étant privé de sa croûte de protection, la mie, encore tiède et moelleuse, présente des caractéristiques physiques collantes. Ceci se manifeste par une adhérence du pain sur l'ensemble des convoyeurs de la ligne de fabrication, adhérence qui est à l'origine d'un mauvais acheminement des pains jusqu'à la trancheuse, générant des pains tassés, déformés ou écrasés.

L'élimination de la croûte, en particulier de la croûte latérale, réduit considérablement la rigidité du pain de mie. En effet, la rigidité et la tenue du pain de mie sont normalement conférées par la croûte séchée et durcie. Il en résulte très souvent une déformation par affaissement du pain de mie sous l'action des lames de la trancheuse. Les pains de mie sans croûte s'accumulent, se tassent les uns sur les autres dans la trancheuse, et la réduction du glissement des pains sur les convoyeurs accentue ce phénomène.

Ainsi, les pains de mie obtenus à l'aide des procédés de l'art antérieur sont tranchés irrégulièrement à la fois en termes d'épaisseur et de section. Un amas de mie peut même se former et provoquer très rapidement un bourrage de la trancheuse, entraînant généralement un arrêt de la ligne de fabrication.

Les procédés de l'art antérieur ne donnent donc pas entière satisfaction car les pertes de produits sont importantes.

Un but de la présente invention est donc de résoudre les problèmes cités précédemment à l'aide d'une solution simple à mettre en oeuvre, fiable et peu coûteuse.

Pour cela, l'invention propose de refroidir en surface le pain de mie sans croûte avant son tranchage, de manière à le durcir localement en crénant une croûte artificielle.

Plus précisément, la présente invention a pour objet un procédé de fabrication de pain de mie sans croûte et tranché, comprenant les étapes consistant à cuire un pain de mie, à refroidir le pain de mie cuit jusqu'à une première température, à éliminer la croûte latérale du pain de mie refroidi et à trancher transversalement le pain de mie sans croûte, caractérisé en ce qu'il comprend, après l'étape d'élimination de la croûte et avant l'étape de tranchage, une étape intermédiaire consistant à soumettre le pain de mie sans croûte à un refroidissement supplémentaire pour l'amener à une seconde température inférieure à la première température de manière à assurer son durcissement au moins en surface.

De manière préférée, lors du refroidissement supplémentaire, le pain de mie est amené à une température en surface de l'ordre de -20 à +10°C.

Selon un premier mode de mise en oeuvre, le refroidissement supplémentaire est effectué dans un enceinte refroidie à une température de l'ordre de 2 à 10°C, jusqu'à ce que la température en surface du pain de mie soit de l'ordre de 2 à 10°C. Dans ce cas, le refroidissement supplémentaire est de préférence effectué pendant une durée de l'ordre de 5 à 180 minutes.

Selon un deuxième mode de mise en oeuvre, le refroidissement supplémentaire est effectué dans un enceinte refroidie à une température de l'ordre de -1 à -30°C jusqu'à ce que la température en surface du pain de mie soit de l'ordre de -20 à +4°C. Dans ce cas, le refroidissement supplémentaire est de préférence effectué pendant une durée de l'ordre de 5 à 60 minutes.

Selon un troisième mode de mise en oeuvre, le refroidissement supplémentaire est effectué dans un enceinte ventilée refroidie à une température de l'ordre de -30 à -90°C jusqu'à ce que la température en surface du pain de mie soit de l'ordre de -20 à +4°C. Dans ce cas, le refroidissement supplémentaire est de préférence effectué pendant une durée de l'ordre de 15 secondes à 15 minutes et l'enceinte est refroidie par cryogénie en utilisant soit de l'azote liquide soit du gaz carbonique liquide.

Dans tous les cas présentés précédemment, le refroidissement initial peut avantageusement être effectué dans une ambiance ayant un taux d'hygrométrie de l'ordre de 45 à 55% et une température de l'ordre de 15 à 35°C, de manière à obtenir une température à coeur du pain de l'ordre de 20 à 30°C.

Le tranchage du pain de mie sans croûte est de préférence réalisé au plus 5 minutes après avoir été soumis à l'étape de refroidissement supplémentaire, par exemple environ 1 minute après.

L'invention va maintenant être décrite plus en détail en référence à des modes de mise en oeuvre particuliers donnés à titre d'illustration uniquement et représentés sur les figures annexées dans lesquelles :
- la figure 1 est une vue schématique en plan d'une partie de chaîne de fabrication de pain de mie sans croûte et tranché conforme à la présente invention ;
- la figure 2 est une vue en élévation à échelle agrandie suivant la ligne II-II de la figure 1, représentant un poste d'élimination des croûtes latérales du pain de mie ; et
- la figure 3 est une vue de détail suivant la ligne III-III de la figure 2 de l'un des dispositifs de tranchage de croûtes latérales.

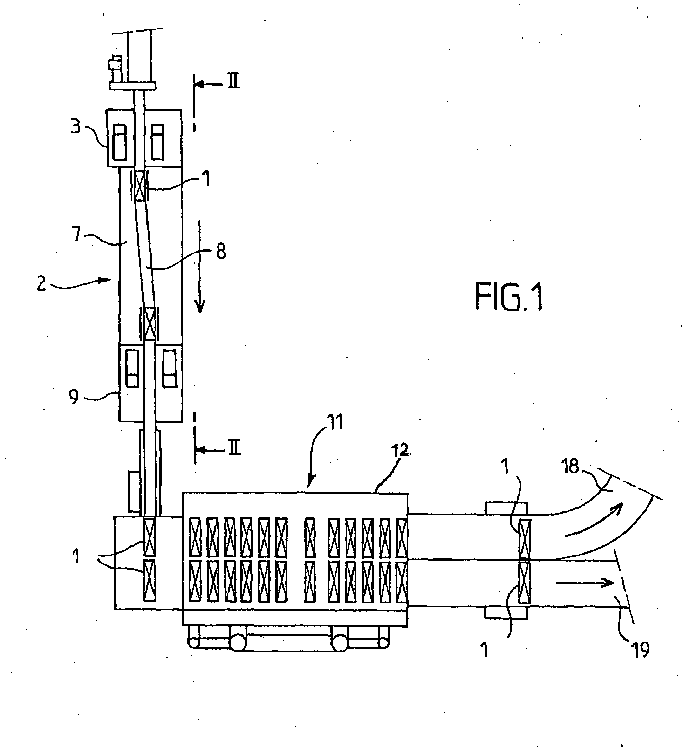

Le procédé de fabrication de pain de mie sans croûte et tranché conforme à la présente invention commence par une étape de cuisson d'un pâton ayant la forme désirée. Cette étape n'est ni décrite ni représentée sur le schéma de la figure 1 car elle est très largement connue.

Une fois cuit, le pain de mie 1 sortant du four de cuisson sur un convoyeur de type connu est soumis à un refroidissement initial effectué dans une ambiance ayant un taux d'hygrométrie de l'ordre de 45 à 55% et une température de l'ordre de 15 à 35°C. Ce refroidissement initial permet d'obtenir une température à coeur du pain de mie cuit de l'ordre de 20 à 30°C.

Ensuite, la croûte latérale du pain de mie refroidi 1, c'est-à-dire la croûte des quatre grands côtés, est éliminée, à l'exclusion des croûtes des deux extrémités, ou talons, qui seront éventuellement éliminées lors du tranchage final.

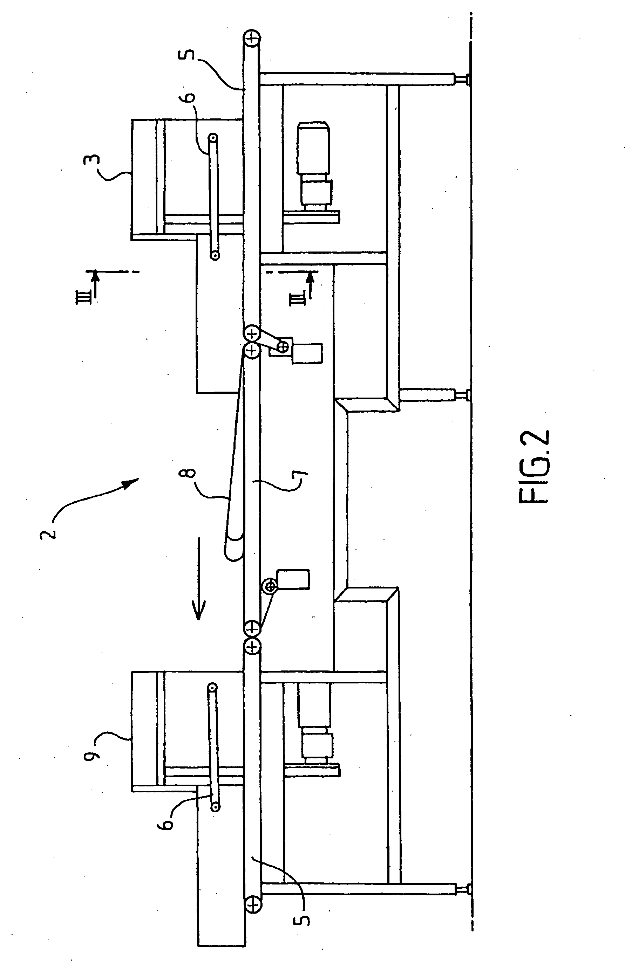

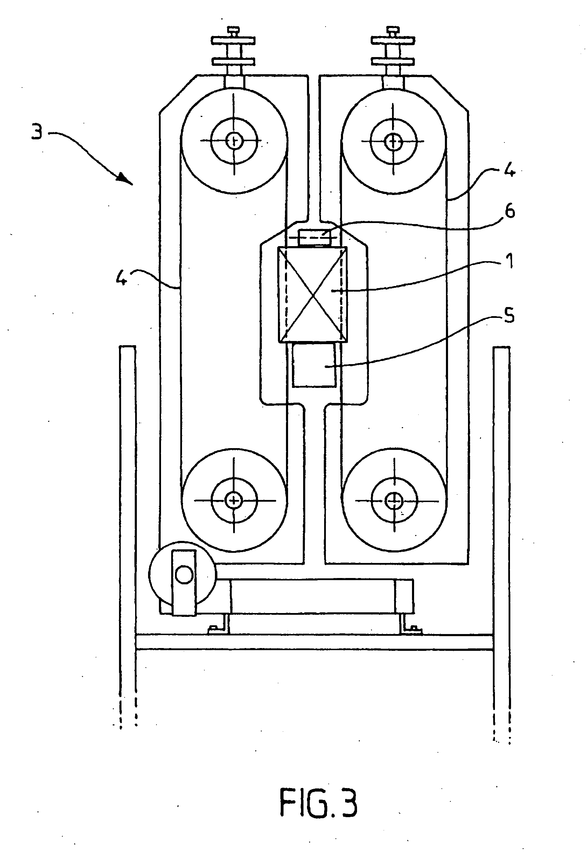

Pour cela, le pain de mie refroidi 1 passe par un poste de tranchage 2 qui est également représenté plus en détail sur les figures 2 et 3. Ce poste de tranchage 2 est équipé d'un premier dispositif de coupe 3 muni de deux lames de scie à ruban 4 qui vont découper verticalement les deux premières croûtes latérales du pain de mie refroidi 1 selon les traits représentés en pointillés, tandis que celui-ci continue d'avancer entre deux tapis roulants horizontaux 5 et 6.

Le pain de mie 1 arrive ensuite sur un autre tapis horizontal 7 associé à un tapis incliné 8. Ce dernier provoque le soulèvement partiel du pain de mie 1 qui se trouve ainsi déséquilibré et bascule de 90° avant de pénétrer dans un second dispositif de coupe 9 identique au premier et dans lequel les deux autres croûtes latérales sont éliminées de la même façon.

Ainsi, à la sortie du poste de tranchage 2, le pain de mie 1 se trouve débarrassé de ses quatre grandes croûtes latérales.

Conformément à la présente invention, le pain de mie sans croûte 1 va subir un traitement de refroidissement supplémentaire dans un poste 11 prévu à cet effet. Ce poste de refroidissement 11 permet ainsi de conférer au pain de mie sans croûte 1 une meilleure tenue mécanique, facilitant son convoyage et son tranchage ultérieur, sans avoir à subir les inconvénients cités précédemment.

Plus précisément, le poste 11 est une enceinte de refroidissement secondaire 12 adaptée pour former, à la surface du pain de mie 1, une fine zone périphérique déshydratée et durcie qui, sans être colorée, est assimilable à une croûte artificielle. Plusieurs modes de mise en oeuvre sont envisageables conformément à la présente invention pour amener le pain de mie sans croûte à une seconde température inférieure à la première température.

Selon un premier mode de mise en oeuvre, le pain de mie sans croûte 1 est disposé dans une enceinte 12 refroidie à une température d'environ 2 à 10°C, pendant une durée située dans une plage de 5 à 180 minutes, jusqu'à ce que sa température en surface soit de l'ordre de 2 à 10°C.

Selon un deuxième mode de mise en oeuvre, le pain de mie sans croûte 1 est disposé dans une enceinte 12 refroidie à une température d'environ -1 à -30°C, pendant une durée située dans une plage de 5 à 60 minutes, jusqu'à ce que sa température en surface soit de l'ordre de -20 à +4°C.

Selon un troisième mode de mise en oeuvre, le pain de mie sans croûte 1 est disposé dans une enceinte ventilée 12 refroidie à une température d'environ -30 à -90°C, pendant une durée située dans une plage de 15 secondes à 15 minutes, jusqu'à ce que sa température en surface soit de l'ordre de -20 à +4°C. Dans ce cas, l'enceinte 12 est refroidie par cryogénie en utilisant de l'azote liquide ou du gaz carbonique à l'état liquide.

Bien entendu, plusieurs pains de mie sans croûte 1 sont refroidis simultanément dans l'enceinte 12, comme cela est illustré sur la figure 1.

A la sortie du poste de refroidissement supplémentaire 11, chaque pain de mie sans croûte 1 est pourvu, sur sa périphérie, d'une fine couche durcie en surface lui conférant la rigidité nécessaire à son tranchage. En effet, grâce à ce refroidissement supplémentaire, le pain de mie sans croûte 1 retrouve ses caractéristiques physiques initiales, notamment sa possibilité de glisser sur les convoyeurs et sa rigidité extérieure.

Les pains de mie sans croûte et refroidis sont alors séparés en deux lignes distinctes 18 et 19 aboutissant chacune à une trancheuse (non représentée) de type connue dans laquelle ils sont tranchés transversalement, par exemple perpendiculairement à leur longueur, sans phénomène de collage ou d'écrasement de la mie. Des tranches régulières de 9 à 15 mm d'épaisseur peuvent ainsi être réalisées rapidement et sans inconvénient juste après le refroidissement supplémentaire. Les talons des pains de mie sans croûte 1 sont également tranchés lors de cette étape.

Sachant que la mie de pain reprend sa texture initiale et perd les caractéristiques citées précédemment dans un délai de 5 à 15 minutes après l'étape de refroidissement supplémentaire, cela laisse suffisamment de temps pour transporter le pain de mie sans croûte et refroidi jusqu'au poste de tranchage, puis pour le trancher comme décrit précédemment. Avantageusement, le pain est tranché environ 1 minute après avoir été soumis au refroidissement supplémentaire.

Le pain de mie sans croûte et tranché est alors convoyé jusqu'à un poste d'emballage (non représenté) de type connu.

Le procédé de fabrication conforme à la présente invention permet donc d'obtenir des pains de mie sans croûte et tranchés d'excellente qualité. Ce procédé présente également toutes les garanties de sécurité au niveau microbiologique.

Il va de soi que la description détaillée de l'objet de l'Invention, donnée uniquement à titre d'illustration, ne constitue en aucune manière une limitation, les équivalents techniques étant également compris dans le champ de la présente invention.

Ainsi, les pains peuvent être disposés sur des chariots fixes et laisses dans l'enceinte 12 pendant l'étape de refroidissement supplémentaire.

## Revendications

1. Procédé de fabrication de pain de mie sans croûte et tranché, comprenant les étapes consistant à cuire un pain de mie, à refroidir le pain de mie cuit jusqu'à une première température, à éliminer la croûte latérale du pain de mie refroidi et à trancher transversalement le pain de mie sans croûte, **caractérisé en ce qu'**il comprend, après l'étape d'élimination de la croûte et avant l'étape de tranchage, une étape intermédiaire consistant à soumettre le pain de mie sans croûte à un refroidissement supplémentaire pour l'amener à une seconde température inférieure à la première température de manière à assurer son durcissement au moins en surface.

2. Procédé selon la revendication 1, **caractérisé en ce que** lors du refroidissement supplémentaire, le pain de mie est amené à une température en surface de l'ordre de -20 à +10°C.

3. Procédé selon la revendication 1 ou 2, **caractérisé en ce que** le refroidissement supplémentaire est effectué dans un enceinte refroidie à une température de l'ordre de 2 à 10°C jusqu'à ce que la température en surface du pain de mie soit de l'ordre de 2 à 10°C.

4. Procédé selon la revendication 3, **caractérisé en ce que** le refroidissement supplémentaire est effectué pendant une durée de l'ordre de 5 à 180 minutes.

5. Procédé selon la revendication 1 ou 2, **caractérisé en ce que** le refroidissement supplémentaire est effectué dans un enceinte refroidie à une température de l'ordre de -1 à -30°C jusqu'à ce que la température en surface du pain de mie soit de l'ordre de -20 à +4°C.

6. Procédé selon la revendication 5, **caractérisé en ce que** le refroidissement supplémentaire est effectué pendant une durée de l'ordre de 5 à 60 minutes.

7. Procédé selon la revendication 1 ou 2, **caractérisé en ce que** le refroidissement supplémentaire est effectué dans un enceinte ventilée refroidie à une température de l'ordre de -30 à -90°C jusqu'à ce que la température en surface du pain de mie soit de l'ordre de -20 à +4°C.

8. Procédé selon la revendication 7, **caractérisé en ce que** le refroidissement supplémentaire est effectué pendant une durée de l'ordre de 15 secondes à 15 minutes.

9. Procédé selon la revendication 7 ou 8, **caractérisé en ce que** l'enceinte est refroidie par cryogénie en utilisant soit de l'azote liquide soit du gaz carbonique liquide.

10. Procédé selon l'une quelconque des revendications précédentes, **caractérisé en ce que** le pain de mie est tranché dans un délai d'au plus 5 minutes après l'étape de refroidissement supplémentaire, de préférence après environ 1 minute.

11. Procédé selon l'une quelconque des revendications précédentes, **caractérisé en ce que** le refroidissement initial est effectué dans une ambiance ayant un taux d'hygrométrie de l'ordre de 45 à 55% et une température de l'ordre de 15 à 35°C, de manière à obtenir une température à coeur du pain de l'ordre de 20 à 30°C.

## Claims

1. A method of making sliced sandwich loaf without crust, comprising the steps consisting of baking a sandwich loaf, cooling the baked sandwich loaf to a first temperature, removing the side crust from the cooled sandwich loaf and slicing transversely the sandwich loaf without crust, **characterised in that,** after the step of removing the crust and before the slicing step, it comprises an intermediate step consisting of subjecting the sandwich loaf without crust to an additional cooling to bring it to a second temperature lower than the first temperature so as to ensure hardening of at least the surface thereof.

2. A method according to claim 1, **characterised in that** the sandwich loaf is brought to a surface temperature of approximately -20 to +10°C during the additional cooling.

3. A method according to claim 1 or claim 2, **characterised in that** the additional cooling is carried out in an enclosure cooled to a temperature of approximately 2 to 10°C until the surface temperature of the sandwich loaf is approximately 2 to 10°C.

4. A method according to claim 3, **characterised in that** the additional cooling is carried out for a period of approximately 5 to 180 minutes.

5. A method according to claim 1 or claim 2, **characterised in that** the additional cooling is carried out in an enclosure cooled to a temperature of approximately -1 to -30°C until the surface temperature of the sandwich loaf is approximately -20 to +4°C.

6. A method according to claim 5, **characterised in that** the additional cooling is carried out for a period of approximately 5 to 60 minutes.

7. A method according to claim 1 or claim 2, **characterised in that** the additional cooling is carried out in a ventilated enclosure cooled to a temperature of approximately -30 to -90°C until the surface temperature of the sandwich loaf is approximately -20 to +4°C.

8. A method according to claim 7, **characterised in that** the additional cooling is carried out for a period of approximately 15 seconds to 15 minutes.

9. A method according to claim 7 or claim 8, **characterised in that** the enclosure is cooled cryogenically using either liquid nitrogen or liquid carbon dioxide.

10. A method according to any one of the preceding claims, **characterised in that** the sandwich loaf is sliced within a period of no more than 5 minutes after the additional cooling step, preferably after approximately 1 minute.

11. A method according to any one of the preceding claims, **characterised in that** the initial cooling is carried out in an environment having a relative humidity of approximately 45 to 55 % and a temperature of approximately 15 to 35°C so as to obtain a core temperature of the loaf of approximately 20 to 30°C.

## Patentansprüche

1. Verfahren zur Herstellung von geschnittenem Toastbrot ohne Rinde, mit den Verfahrensschritten, die darin bestehen, ein Toastbrot zu backen, das gebackene Toastbrot auf eine erste Temperatur zu kühlen, die Seitenrinde des gekühlten Toastbrotes zu entfernen und das Toastbrot ohne Rinde quer zu schneiden,
**dadurch gekennzeichnet, dass** es nach dem Verfahrensschritt des Rindenentfernens und vor dem Verfahrensschritt des Schneidens einen Zwischenschritt umfasst, das darin besteht, das Toastbrot ohne Rinde zusätzlich zu kühlen, um es auf eine zweite, im Vergleich zur ersten Temperatur tiefer liegende Temperatur zu bringen, so dass sein Festwerden mindestens oberflächlich gesichert wird.

2. Verfahren nach Anspruch 1, **dadurch gekennzeichnet, dass** das Toastbrot während der zusätzlichen Kühlung auf eine Oberflächentemperatur in der Größenordnung von -20 bis +10°C gebracht wird.

3. Verfahren nach Anspruch 1 oder 2, **dadurch gekennzeichnet, dass** die zusätzliche Kühlung in einer auf eine Temperatur in der Größenordnung von 2 bis 10°C gekühlten Kammer durchgeführt wird, bis die Temperatur an der Oberfläche des Toastbrotes in der Größenordnung von 2 à 10°C ist.

4. Verfahren nach Anspruch 3, **dadurch gekennzeichnet, dass** die zusätzliche Kühlung während einer Zeitdauer in der Größenordnung von 5 bis 180 Minuten durchgeführt wird.

5. Verfahren nach Anspruch 1 oder 2, **dadurch gekennzeichnet, dass** die zusätzliche Kühlung in einer auf eine Temperatur in der Größenordnung von -1 bis -30°C gekühlten Kammer durchgeführt wird, bis die Temperatur an der Oberfläche des Toastbrotes in der Größenordnung von -20 à +4°C ist.

6. Verfahren nach Anspruch 5, **dadurch gekennzeichnet, dass** die zusätzliche Kühlung während einer Zeitdauer in der Größenordnung von 5 bis 60 Minuten durchgeführt wird.

7. Verfahren nach Anspruch 1 oder 2, **dadurch gekennzeichnet, dass** die zusätzliche Kühlung in einer gelüfteten, auf eine Temperatur in der Größenordnung von -30 bis -90°C gekühlten Kammer durchgeführt wird, bis die Temperatur an der Oberfläche des Toastbrotes in der Größenordnung von -20 à +4°C ist.

8. Verfahren nach Anspruch 7, **dadurch gekennzeichnet, dass** die zusätzliche Kühlung während einer Zeitdauer in der Größenordnung von 15 Sekunden bis 15 Minuten durchgeführt wird.

9. Verfahren nach Anspruch 7 oder 8, **dadurch gekennzeichnet, dass** die Kammer unter Verwendung von flüssigem Stickstoff oder von flüssigem Kohlendioxid kryogen gekühlt wird.

10. Verfahren nach einem der vorhergehenden Ansprüche, **dadurch gekennzeichnet, dass** das Toastbrot innerhalb von höchstens 5 Minuten nach dem Verfahrensschritt der zusätzlichen Kühlung, vorzugsweise nach ungefähr 1 Minute, geschnitten wird.

11. Verfahren nach einem der vorhergehenden Ansprüche, **dadurch gekennzeichnet, dass** die Anfangskühlung in einer Umgebung mit einer Feuchtigkeit in der Größenordnung von 45 bis 55% und bei einer Temperatur in der Größenordnung von 15 bis 35°C durchgeführt wird, derart, dass eine Kerntemperatur des Brots in der Größenordnung von 20 bis 30°C erzielt wird.
